# EUROPEAN PATENT SPECIFICATION

(11) **EP 3 240 082 B1**
(45) Date of publication and mention of the grant of the patent: **03.07.2019**
(21) Application number: 17167234.8
(22) Date of filing: 20.04.2017
(51) Int. Cl.: H01M 8/0612, H01M 8/0668, H01M 8/04223, H01M 8/04664, H01M 8/04302, H01M 8/0662, H01M 8/04701, H01M 8/04746, H01M 8/04225

(54) **HIGH-TEMPERATURE OPERATING FUEL CELL SYSTEM AND METHOD FOR OPERATING HIGH-TEMPERATURE OPERATING FUEL CELL SYSTEM**
BRENNSTOFFZELLENSYSTEM MIT HOCHTEMPERATURBETRIEB UND BETRIEBSVERFAHREN EINES BRENNSTOFFZELLENSYSTEMS MIT HOCHTEMPERATURBETRIEB
SYSTÈME DE PILE À COMBUSTIBLE FONCTIONNANT À HAUTE TEMPÉRATURE ET PROCÉDÉ DE FONCTIONNEMENT D'UN SYSTÈME DE PILE À COMBUSTIBLE FONCTIONNANT À HAUTE TEMPÉRATURE

(30) Priority: 28.04.2016 JP 2016090424
(43) Date of publication of application: 01.11.2017
(73) Proprietor: Panasonic Intellectual Property Management Co., Ltd., Osaka-shi, Osaka 540-6207 (JP)
(72) Inventor: ZHANG, Jin, Osaka-shi, Osaka 540-6207 (JP); WAKITA, Hidenobu, Osaka-shi, Osaka 540-6207 (JP); MORITA, Masashi, Osaka-shi, Osaka 540-6207 (JP)
(74) Representative: Grünecker Patent- und Rechtsanwälte PartG mbB

(56) References cited:
- WO-A1-2012/128368
- JP-A- 2006 093 023
- JP-A- 2016 039 058

## Description

### BACKGROUND

### 1. Technical Field

The present disclosure relates to a high-temperature operating fuel cell system and a method for operating a high-temperature operating fuel cell system.

### 2. Description of the Related Art

A solid-oxide fuel cell (hereinafter sometimes referred to as "SOFC") includes, for example, an oxide ion conductive solid electrolyte and electrodes disposed on both sides thereof and generates electricity with high efficiency through the supply of a hydrogen-containing reformed gas (hydrogen) to one electrode (anode) and the supply of air (oxygen) to the other electrode (cathode). That is, such an SOFC generates electricity and heat by producing steam and carbon dioxide through a reaction between oxygen ions and hydrogen that have passed through the solid electrolyte. The electricity generated by the SOFC is taken out of the SOFC for use in household electrical appliances. The heat generated by the SOFC is not only used for hot-water supply and the like but also used to heat the reformed gas, the air, water, and the like.

The SOFC is configured, for example, such that a plurality of cylindrical SOFC single cells each having electrodes provided on both sides of the electrolyte are electrically joined in series as a stack. The reformed gas is supplied to the inside of each of the single cells. Air for electrical generation is supplied to the outside of each of the single cells. Further, a reformer that reforms a raw material is provided on an upstream side of a reformed gas path of the SOFC, and an air preheater that preheats the air is provided on an upstream side of an air path of the SOFC.

Portions of the reformed gas and the air unutilized in the generation of electricity by the SOFC are combusted by a combustor after passing through the SOFC. Moreover, in many cases, the SOFC is configured such that the combustor generates a high-temperature combustion exhaust gas that is utilized as a heat source for the reformer and the air preheater.

International Publication No. 2015/093010 describes an example of a fuel cell system including such an SOFC. Moreover, International Publication No. 2015/093010 discloses that a depurator is provided in a combustion exhaust gas path through which the combustion exhaust gas from the combustor flows and that the depurator has a combustion catalyst that is heated to an appropriate temperature by the heat of the combustion exhaust gas so that toxic substances, such as carbon monoxide, contained in the combustion exhaust gas are removed more appropriately by the depurator. Further, International Publication No. 2015/093010 states that the depurator is heated by a heater at the time of start-up of the fuel cell system, as the temperature of the combustion exhaust gas tends to be low immediately after an operation of igniting the combustor. JP 2016-039058 A relates to a solid oxide type fuel battery device.

However, the conventional example gives no consideration to a problem in a purge operation at the time of start-up in the case of occurrence of an abnormal situation in which a purge operation is impossible at the time of stoppage of the fuel cell system.

### SUMMARY

One non-limiting and exemplary embodiment provides a high-temperature operating fuel cell system and a method for operating a high-temperature operating fuel cell system that make it possible that, in the case of occurrence of an abnormal situation in which a purge operation is impossible at the time of stoppage, the removal of toxic substances by a combustion catalyst of a depurator may be performed more appropriately than ever before by a purge operation at the time of start-up.

A high-temperature operating fuel cell system according to the invention is defined in claim 1. A method of operating a high-temperature operating fuel cell system according to the invention is defined in claim 3. Further advantageous embodiments are defined in the dependent claims.

A high-temperature operating fuel cell system and a method for operating the high-temperature operating fuel cell system according to an aspect of the present disclosure bring about such an effect that, in the case of occurrence of an abnormal situation in which a purge operation is impossible at the time of stoppage, the removal of toxic substances by the combustion catalyst of the depurator can be performed more appropriately than ever before by a purge operation at the time of start-up.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a diagram showing an example of a high-temperature operating fuel cell system according to an embodiment; and
Fig. 2 is a flow chart showing an example of an operation of the high-temperature operating fuel cell system according to the embodiment.

### DETAILED DESCRIPTION

The following findings were obtained by diligently studying a problem in a purge operation at the time of start-up in the case of occurrence of an abnormal situation in which a purge operation is impossible at the time of stoppage of a fuel cell system.

In the case of occurrence of an abnormal situation in which purging inside the fuel cell system is impossible at the time of stoppage of the fuel cell system, there is a high possibility that carbon monoxide and moisture may remain inside the fuel cell system. For example, in the case of occurrence of an abnormality in a raw material supply system for use in purging of the fuel cell system, such an abnormal situation may occur. At this point in time, since carbon monoxide and moisture are present in the residual gas during purging at the time of start-up of the fuel cell system, there is a possibility that the combustor may be hard to ignite and toxic substances such as carbon monoxide may be emitted directly out of the fuel cell system.

To address this problem, the inventors have identified the problem in a purge operation at the time of start-up in the case of occurrence of an abnormal situation in which a purge operation is impossible at the time of stoppage of a fuel cell system, thereby having arrived at the following aspects of the present disclosure.

That is, a high-temperature operating fuel cell system according to the present disclosure is defined in claim 1.

Further, a method for operating a high-temperature operating fuel cell system according to the present disclosure is defined in claim 3.

As such, the high-temperature operating fuel cell system and the method for operating a high-temperature operating fuel cell system according to the present aspect make it possible that, in the case of occurrence of an abnormal situation in which a purge operation is impossible at the time of stoppage, the removal of toxic substances by the combustion catalyst of the depurator may be performed more appropriately than ever before by a purge operation at the time of start-up. A reason for this is as follows.

In the case of occurrence of an abnormal situation in which a purge operation is impossible at the time of stoppage of the high-temperature operating fuel cell system, there is a high possibility, as mentioned above, that carbon monoxide and moisture may remain inside the high-temperature operating fuel cell system. Further, at the time of start-up of the high-temperature operating fuel cell system, the combustion catalyst of the depurator is hardly heated thoroughly by the heat of the combustion exhaust gas and tends to be low in the capability of removing toxic substances. Furthermore, the presence of moisture in the combustion exhaust gas causes the combustion catalyst of the depurator to take up the moisture, facilitating a further decrease in activity of the combustion catalyst. For this reason, in purging at the time of start-up of the high-temperature operating fuel cell system, toxic substances, such as carbon monoxide, contained in the residual gas may be exhausted to the outside without being removed.

To address this problem, the high-temperature operating fuel cell system and the method for operating a high-temperature operating fuel cell system according to the present aspect are configured such that in a case where an abnormal stoppage in which a purge operation of the high-temperature operating fuel cell system is impossible is detected, the combustion catalyst of the depurator is heated by the heater to such an appropriate temperature prior to purging at the time of start-up of the high-temperature operating fuel cell system as to exhibit the capability of removing toxic substances. This enables the depurator to remove toxic substances, such as carbon monoxide, from the residual gas in purging at the time of start-up of the high-temperature operating fuel cell system, so that the possibility of such toxic substances being exhausted to the outside without being removed can be made lower than ever before.

In the high-temperature operating fuel cell system according to the first aspect, a high-temperature operating fuel cell system according to a second aspect of the present disclosure further includes an ignitor for performing an operation of igniting the combustor. After the high-temperature operating fuel cell system has been purged by supplying the air to the reformer, the controller controls the ignitor so that the ignitor performs the operation of igniting the combustor by supplying the raw material to the reformer.

Further, in the method for operating a high-temperature operating fuel cell system according to the first aspect, a method for operating a high-temperature operating fuel cell system according to the second aspect of the present disclosure is configured such that after the high-temperature operating fuel cell system has been purged by supplying the air to the reformer, the controller controls the ignitor so that the ignitor performs the operation of igniting the combustor by supplying the raw material to the reformer.

As such, the high-temperature operating fuel cell system and the method for operating a high-temperature operating fuel cell system according to the present aspect make it possible that even in a case where an abnormal stoppage in which a purge operation of the high-temperature operating fuel cell system is impossible is detected, moisture contained in the residual gas may be removed in purging at the time of start-up of the high-temperature operating fuel cell system. This makes it possible to appropriately perform the operation of igniting the combustor.

Furthermore, the high-temperature operating fuel cell system and the method for operating a high-temperature operating fuel cell system according to the present aspect make it possible that in a case where an abnormal stoppage in which a purge operation is impossible is not detected, the operation of igniting the combustor may be immediately performed without the need for the heating of the combustion catalyst of the depurator by the heater, as carbon monoxide and moisture contained in the residual gas have been removed in purging at the time of stoppage of the high-temperature operating fuel cell system. This makes it possible to reduce the amount of energy that is used to make the heater operate.

An embodiment of the present disclosure is described below with reference to the accompanying drawings. The embodiment described below serves as a general or specific example of the present disclosure. That is, numerical values, shapes, materials, constituent elements, and the locations and topology of the constituent elements, steps, the orders of the steps, and the like that are shown in the embodiment below are merely examples, and are not intended to limit the present disclosure. Further, those of the constituent elements in the embodiment below which are not recited in an independent claim representing the most superordinate concept are described as optional constituent elements. A description of those constituent elements given the same reference numerals may be omitted. For ease of comprehension, the drawings schematically show each of the constituent elements. Further, in an operation of the embodiment below, it is possible, if necessary, to change the order of steps and the like and add another publicly-known step.

### Embodiment

### Apparatus Configuration

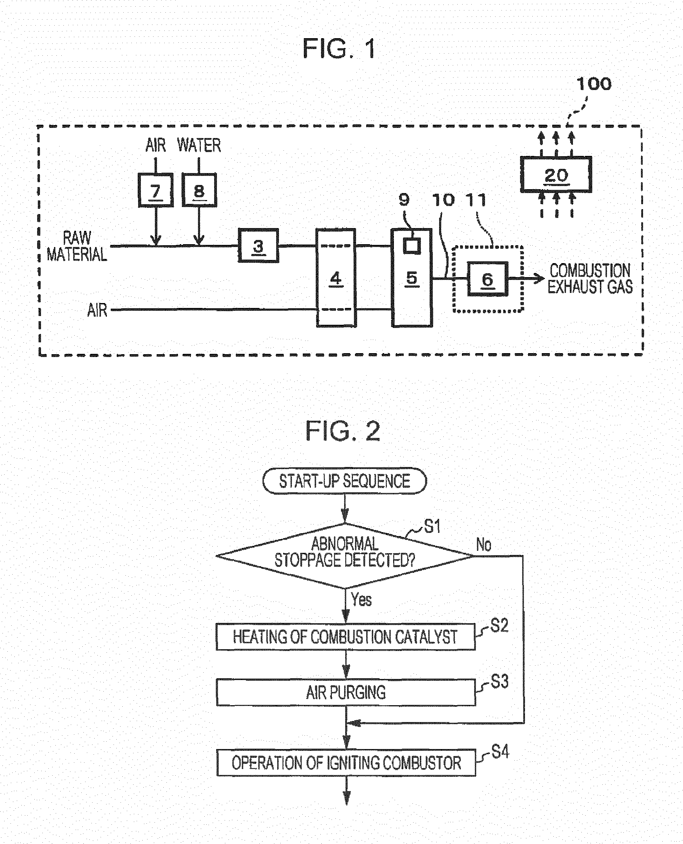

Fig. 1 is a diagram showing an example of a high-temperature operating fuel cell system according to an embodiment.

A high-temperature operating fuel cell system is described below by taking, as a specific example thereof, a solid-oxide fuel cell system whose electrical generator includes a solid-oxide fuel cell (hereinafter "SOFC 4"). However, the high-temperature operating fuel cell system is not limited to this example. The high-temperature operating fuel cell system may be configured in any manner as long as it is a fuel cell system that operates at high temperatures (e.g. 600°C or higher). For example, instead of being an SOFC system 100 described below, the high-temperature operating fuel cell system may be a molten carbonate fuel cell system whose electrical generator includes a molten carbonate fuel cell (MCFC).

In the example shown in Fig. 1, the SOFC system 100 includes a reformer 3, an SOFC 4, a combustor 5, a depurator 6, an air supplier 7, a water supplier 8, an ignitor 9, a combustion exhaust gas path 10, a heater 11, and a controller 20.

The reformer 3 produces a reformed gas from air and a raw material. The reformer 3 has a vessel filled with a reforming catalyst (not illustrated) for accelerating a reforming reaction. Usable examples of a catalytic metal of the reforming catalyst include Ru, Ni, and the like.

In the reforming catalyst of the reformer 3, the raw material undergoes a reforming reaction to form a hydrogen-containing reformed gas. The reforming reaction may take any form. Examples of the reforming reaction include a steam-reforming reaction, an autothermal reaction, a partial oxidation reaction, and the like.

Incidentally, at the time of start-up, the SOFC system 100 according to the present embodiment lacks thermal energy for the reformer 3 to produce a steam-reforming reaction, which is an endothermic reaction. To address this problem, the reformer 3 is designed to be able to produce a partial oxidation reaction, which is an exothermic reaction, as well as a steam-reforming reaction. This allows the reformer 3 to produce a partial oxidation reaction at the time of start-up of the SOFC system 100 to produce a reformed gas containing a hydrogen gas and a carbon monoxide gas with the use of air introduced from the air supplier 7 into the reformer 3 without the supply of water from the water supplier 8 to the reformer 3. The progress of this partial oxidation reforming reaction causes water for use in the reforming reaction to be supplied from the water supplier 8 to the reformer 3 when the temperature inside of the reformer 3 rises to a predetermined temperature (e.g. approximately 500°C). This leads to progress of an autothermal reaction in which the partial oxidation reforming reaction coexists with a steam-reforming reaction. Then, when the temperature inside of the reformer 3 further rises to a predetermined temperature (e.g. approximately 600°C), the supply of air to the reformer 3 by the air supplier 7 is stopped and a steam-reforming reaction that may produce a hydrogen gas with high efficiently starts to progress, whereby the SOFC system 100 starts to generate electricity, It should be noted that the predetermined temperatures above are illustrative and are not limited to this example.

That is, the air supplier 7 supplies air to the reformer 3. Further, the water supplier 8 supplies water to the reformer 3. It should be noted that the air supplier 7 may be configured in any manner as long as it can supply air to the reformer 3. Possible examples of the air supplier 7 include a blower, a fan, and the like. Further, the water supplier 8 may be configured in any manner as long as it can supply water to the reformer 3. Possible examples of the water supplier 8 include a positive-displacement pump and the like.

Usable examples of the raw material for use in the reforming reaction include: hydrocarbon fuel gases, such as town gas, natural gas, and LPG that are composed mainly of methane, which contain organic compounds constituted by at least carbon and hydrogen; and hydrocarbon liquid fuels such as alcohol, biofuels, and light oil.

A desulfurizer (not illustrated; e.g. a room-temperature desulfurizer, a hydro-desulfurizer, or the like) may be provided on a raw material supply path. This removes a sulfur compound contained in the raw material that is supplied to the reformer 3. It should be noted that a raw material supplier (not illustrated) is provided at an upstream end of the raw material supply path. The raw material supplier is an apparatus that adjusts the flow rate of the raw material that is sent to the reformer 3. The raw material supplier is constituted, for example, by a booster and a flow regulating valve. Alternatively, the raw material supplier may be constituted by either a booster or a flow regulating valve. A usable example of the booster may be, but is not limited to, a positive-displacement pump. The raw material is sent from a raw material supply source to the raw material supplier. The raw material supply source includes a predetermined supply pressure. Possible examples of the raw material supply source include a raw material cylinder, a raw material infrastructure, and the like.

The SOFC 4 generates electricity with the use of the reformed gas from the reformer 3 and air. The SOFC 4 has a cathode to which air (oxygen) is supplied from an air supplier (not illustrated) such as a blower through an air supply path, and the SOFC 4 has an anode to which the reformed gas (e.g. a gas containing H₂, CO, CH₄, and the like) is supplied from the reformer 3 through a reformed gas supply path. This allows the SOFC 4 to produce an electricity generating reaction.

The SOFC 4 includes, for example, a plurality of SOFC 4 single cells (not illustrated) gathered and connected in series. The SOFC 4 may be formed by stacking a plurality of flat-plate single cells or may be formed by gathering a plurality of cylindrical single cells. It should be noted that the SOFC system 100 is provided with a temperature detector (not illustrated) that detects an operating temperature (e.g. 600°C or higher) of the SOFC 4, an electrode (not illustrated) for taking out a current generated by the SOFC 4, and the like. A configuration of the SOFC 4 is similar to that of a common SOFC and, as such, is not described in detail.

The combustor 5 burns unutilized portions of the reformed gas and the air exhausted from the SOFC 4. Specifically, the portion of the reformed gas unused in the generation of electricity by the SOFC 4 (anode off-gas) flows into an anode off-gas exhaust path and, after passing through this anode off-gas exhaust path, is sent to the combustor 5. The portion of the air unused in the generation of electricity by the SOFC 4 (cathode off-gas) is sent to the combustor 5 after having passed through a cathode off-gas exhaust path. That is, the anode off-gas exhaust path and the cathode off-gas exhaust path are each connected to the combustor 5. This allows the combustor 5 to attain diffusion combustion.

Note here that the ignitor 9 and a combustion detector (not illustrated) are provided in the combustor 5.

The ignitor 9 is an apparatus for performing an operation of igniting the combustor 5. In the case of the time of start-up of the SOFC system 100, the case of extinguishment of the flames in the combustor 5 due to some sort of change in situation during operation of the SOFC system 100, or the like, the ignitor 9 performs the operation of igniting the combustor 5, as long as combustion conditions are met inside the combustor 5. The ignitor 9 may be in any form as long as it can perform the operation of igniting the combustor 5. Possible examples of the ignitor 9 include an electric heater, a spark plug, and the like. Once the operation of igniting the combustor 5 is performed, a high-temperature combustion exhaust gas is generated in a combustion space (not illustrated) of the combustor 5.

The combustion exhaust gas path 10 is a passage through which the combustion exhaust gas generated in the combustor 5 flows.

The combustion exhaust gas flowing through the combustion exhaust gas path 10 is sent to an area around the reformer 3, an area around an evaporator (not illustrated), an area around an air heat exchanger (not illustrated) through which air for electrical generation passes, and the like. This allows the reforming catalyst of the reformer 3 to be heated by the heat of the combustion gas to a predetermined temperature (e.g. approximately 600°C) suitable for the reforming reaction. Further, the heat of the combustion exhaust gas allows the evaporator to produce steam needed for the reformer 3 to produce the reforming reaction. Furthermore, the air heat exchanger may use the combustion exhaust gas as a heated fluid to preheat the air for electrical generation that is supplied to the cathode of the SOFC 4.

The depurator 6 is an apparatus, provided in the combustion exhaust gas path 10, which includes a combustion catalyst for freeing the combustion exhaust gas of toxic substances. For example, the depurator 6 may be provided on the combustion exhaust gas path 10 through which the combustion exhaust gas flows after the reforming catalyst, water, air, and the like have been heated. This allows the depurator 6 to be heated to a predetermined temperature (e.g. approximately 200°C) at which the toxic substances can be removed by the combustion catalyst. This allows toxic substances, such as carbon monoxide, contained in the combustion exhaust gas to be removed by the action of the combustion catalyst of the depurator 6. It should be noted that this predetermined temperature is illustrative and is not limited to this example.

Usable examples of the combustion catalyst of the depurator 6 include, but are not limited to, a Pt precious metal catalyst. The combustion exhaust gas having passed through the depurator 6 is exhausted out of the SOFC system 100 and, for example, sent to a heat exchanger (not illustrated) for producing warm water for hot-water supply.

The heater 11 is an apparatus that heats the combustion catalyst of the depurator 6. As in International Publication No. 2015/093010, the temperature of the combustion exhaust gas tends to be low immediately after the operation of igniting the combustor 5, for example, in the case of the time of start-up of the SOFC system 100. Accordingly, in this case, the depurator 6 may be heated by the heater 11. Possible examples of the heater 11 include an electric heater and the like.

Note here that, generally, in a stoppage sequence in the SOFC system 100, a purge operation is performed by supplying the raw material to an inflammable gas flow passage including the anode of the SOFC 4.

However, in the case of occurrence of an abnormal situation in which purging inside the SOFC system 100 is impossible at the time of stoppage of the SOFC system 100, there is a high possibility that carbon monoxide and moisture may remain inside the inflammable gas passage including the anode of the SOFC 4. For example, in the case of occurrence of an abnormality in a raw material supply system for use in purging of the SOFC system 100, such an abnormal situation may occur. At this point in time, since carbon monoxide and moisture are present in the residual gas during purging at the time of start-up of the SOFC system 100, there is a possibility that the combustor may be hard to ignite and toxic substances such as carbon monoxide may be emitted directly out of the SOFC system 100.

To address this problem, the SOFC system 100 according to the present embodiment is configured such that, at the time of start-up in a case of having detected an abnormal stoppage in which a purge operation of the SOFC system 100 is impossible, the controller 20 controls the heat 11 so that the heater 11 heats the combustion catalyst of the depurator 6 to the predetermined temperature.

Then, the controller 20 controls the air supplier 7 so that the air supplier 7 purges the SOFC system 100 by supplying the air to the reformer 3.

After that, the controller 20 controls the ignitor 9 so that the ignitor 9 performs the operation of igniting the combustor 5 by supplying the raw material to the reformer 3. On the other hand, at the time of start-up in a case of not having detected an abnormal stoppage in which a purge operation of the SOFC system 100 is impossible, the controller 20 controls the ignitor 9, without the combustion catalyst being heated by the heater 11, so that the ignitor 9 performs the operation of igniting the combustor 5 by supplying the raw material to the reformer 3.

The controller 20 may be configured in any manner as long as it has a control function. The controller 20 includes, for example, an arithmetic circuit (not illustrated) and a storage circuit (not illustrated) storing a control program. Possible examples of the arithmetic circuit include an MPU, a CPU, and the like. Examples of the storage circuit include a memory and the like. The controller 20 may be constituted by a single controller that exercises centralized control or may be constituted by a plurality of controllers that exercise decentralized control in cooperation with each other.

### Operation

An example of an operation of the SOFC system 100 according to the present embodiment is described below with reference to the drawings.

Fig. 2 is a flow chart showing an example of an operation of the high-temperature operating fuel cell system according to the embodiment. It should be noted that the following operation, shown in the flow chart, is performed, for example by the arithmetic circuit of the controller 20 reading out the control program from the storage circuit. Note, however, that it is not essential that the following operation be performed by the controller 20. Part or the whole of the operation may be performed by an operator.

During operation of (generation of electricity by) the SOFC system 100, the reformer 3 produces a reformed gas from a raw material and air. Further, the SOFC 4 generates electricity with the use of the reformed gas and air. Further, the combustor 5 burns unutilized portions of the reformed gas and the air exhausted from the SOFC 4. Furthermore, with the use of the combustion catalyst of the depurator 6 provided in the combustion exhaust gas path 10 through which a combustion exhaust gas generated in the combustor 5 flows, the combustion exhaust gas is freed of toxic substances.

At the time of stoppage (stoppage sequence) of the SOFC system 100, a purge operation is normally performed as described above by supplying the raw material to the inflammable gas passage including the anode of the SOFC 4, but in the case of occurrence of an abnormal situation in which purging inside the SOFC system 100 is impossible, a flag indicating the occurrence of an abnormal stoppage in which such a purge operation is impossible is stored in the storage circuit of the controller 20.

Accordingly, at the time of start-up (start-up sequence) of the SOFC system 100, it is determined in step S1 whether an abnormal stoppage in which the purge operation is impossible was detected.

In a case where an abnormal stoppage in which a purge operation is impossible was detected in step S1, the combustion catalyst of the depurator 6 is heated to a predetermined temperature (e.g. approximately 200°C) by the heater 11 in step S2, and then the SOFC system 100 is purged in step S3 by the air being supplied to the reformer 3. It should be noted that the predetermined temperature in step S2 is illustrative and is not limited to this example.

Next, in step S4, an operation of igniting the combustor 5 is performed by the raw material being supplied to the reformer 3. It should be noted that, at this point in time, air is also supplied to the cathode of the SOFC 4.

On the other hand, in a case where an abnormal stoppage in which a purge operation is impossible was not detected in step S1, the combustion catalyst of the depurator 6 is not heated by the heater 11, and in step S4, the operation of igniting the combustor 5 is performed by the raw material being supplied to the reformer 3.

As stated above, the SOFC system 100 and the method for operating the SOFC system 100 according to the present embodiment make it possible that, in the case of occurrence of an abnormal situation in which a purge operation is impossible at the time of stoppage, the removal of toxic substances by the combustion catalyst of the depurator 6 may be performed more appropriately than ever before by a purge operation at the time of start-up. A reason for this is as follows.

in the case of occurrence of an abnormal situation in which a purge operation is impossible at the time of stoppage of the SOFC system 100, there is a high possibility, as mentioned above, that carbon monoxide and moisture may remain inside the SOFC system 100. Further, at the time of start-up of the SOFC system 100, the combustion catalyst of the depurator 6 is hardly heated thoroughly by the heat of the combustion exhaust gas and tends to be low in the capability of removing toxic substances. Furthermore, the presence of moisture in the combustion exhaust gas causes the combustion catalyst of the depurator 6 to take up the moisture, facilitating a further decrease in activity of the combustion catalyst. For this reason, in purging at the time of start-up of the SOFC system 100, toxic substances, such as carbon monoxide, contained in the residual gas may be exhausted to the outside without being removed.

To address this problem, the SOFC system 100 and the method for operating the SOFC system 100 according to the present embodiment are configured such that in a case where an abnormal stoppage in which a purge operation of the SOFC system 100 is impossible is detected, the combustion catalyst of the depurator 6 is heated by the heater 11 to such an appropriate temperature prior to purging at the time of start-up of the SOFC system 100 as to exhibit the capability of removing toxic substances. This enables the depurator 6 to remove toxic substances, such as carbon monoxide, from the residual gas in purging at the time of start-up of the SOFC system 100, so that the possibility of such toxic substances being exhausted to the outside without being removed can be made lower than ever before.

Further, the SOFC system 100 and the method for operating the SOFC system 100 according to the present embodiment make it possible that even in a case where an abnormal stoppage in which a purge operation of the SOFC system 100 is impossible is detected, moisture contained in the residual gas may be removed in purging at the time of start-up of the SOFC system 100. This makes it possible to appropriately perform the operation of igniting the combustor 5.

Furthermore, the SOFC system 100 and the method for operating the SOFC system 100 according to the present embodiment make it possible that in a case where an abnormal stoppage in which a purge operation is impossible was not detected, the operation of igniting the combustor 5 can be immediately performed without the need for the heating of the combustion catalyst of the depurator 6 by the heater 11, as carbon monoxide and moisture contained in the residual gas have been removed in purging at the time of stoppage of the SOFC system 100. This makes it possible to reduce the amount of energy that is used to make the heater 11 operate.

From the foregoing description, many improvement and other embodiments of the present disclosure are apparent to persons skilled in the art. Therefore, the foregoing description should be interpreted for illustrative purposes only and is one provided for the purpose of teaching persons skilled in the art the best mode for carrying out the present disclosure. Details of the structure and/or function of the present disclosure can be substantially modified without departing from the scope of the present disclosure as claimed.

An aspect of the present disclosure is applicable to a high-temperature operating fuel cell system and a method for operating a high-temperature operating fuel cell system that make it possible that, in the case of occurrence of an abnormal situation in which a purge operation is impossible at the time of stoppage, the removal of toxic substances by a combustion catalyst of a depurator may be performed more appropriately than ever before by a purge operation at the time of start-up.

## Claims

1. A high-temperature operating fuel cell system comprising:
a reformer (3) that produces a reformed gas from air and a raw material;
an air supplier (7) that supplies the air to the reformer (3);
a fuel cell (4) that generates electricity with the reformed gas from the reformer (3) and air;
a combustor (5) in which unutilized portions of the reformed gas and the air exhausted from the fuel cell (4) burn;
a combustion exhaust gas path (10) through which a combustion exhaust gas generated in the combustor (5) passes;
a depurator (6), provided in the combustion exhaust gas path (10), which includes a combustion catalyst for freeing the combustion exhaust gas of toxic substances;
a heater (11) that heats the combustion catalyst;
an ignitor (9) for performing an operation of igniting the combustor (5); and
a controller (20),
**characterized in that**
at start-up in a case of having detected an abnormal stoppage in which a purge operation of the high-temperature operating fuel cell system is impossible, the controller (20) is configured to first control the heater (11) so that the heater (11) heats the combustion catalyst to a predetermined temperature and then control the air supplier (7) so that the air supplier (7) purges the high-temperature operating fuel cell system by supplying the air to the reformer (3),
wherein at start-up in a case of not having detected an abnormal stoppage in which a purge operation of the high-temperature operating fuel cell system is impossible, the controller (20) is configured to control the ignitor (9), without the combustion catalyst being heated by the heater (11), so that the ignitor (9) performs the operation of igniting the combustor (5) by supplying the raw material to the reformer (3).

2. The high-temperature operating fuel cell system according to Claim 1, wherein after the high-temperature operating fuel cell system has been purged by supplying the air to the reformer (3), the controller (20) is configured to control the ignitor (9) so that the ignitor (9) performs the operation of igniting the combustor (5) by supplying the raw material to the reformer (3).

3. A method for operating high-temperature operating fuel cell system, comprising, during operation:
forming a reformed gas from a raw material and air in a reformer (3);
generating electricity with the reformed gas and air in a fuel cell (4);
burning, in a combustor (5), unutilized portions of the reformed gas and the air exhausted from the fuel cell (4); and
with a combustion catalyst of a depurator (6) provided in a combustion exhaust gas path (10) through which a combustion exhaust gas generated in the combustor (5) passes, freeing the combustion exhaust gas of toxic substances,
**characterized in that**
at start-up in a case where an abnormal stoppage in which a purge operation is impossible is detected, the combustion catalyst is heated to a predetermined temperature by the heater (11) first, and then the high-temperature operating fuel cell system is purged by the air being supplied to the reformer (3),
wherein at start-up in a case where an abnormal stoppage in which a purge operation is impossible is not detected, an operation of igniting the combustor (5) is performed by the raw material being supplied to the reformer (3), without the combustion catalyst being heated by the heater (11).

4. The method according to Claim 3, wherein after the high-temperature operating fuel cell system has been purged by the air being supplied to the reformer (3), an operation of igniting the combustor (5) is performed by the raw material being supplied to the reformer (3).

## Patentansprüche

1. Brennstoffzellensystem mit Hochtemperaturbetrieb, umfassend:
einen Reformer (3), der aus Luft und einem Ausgangsmaterial ein reformiertes Gas erzeugt;
eine Luftzufuhrvorrichtung (7), die dem Reformer (3) Luft zuführt:
eine Brennstoffzelle (4), die mit dem reformierten Gas aus dem Reformer (3) und Luft Elektrizität erzeugt
einen Verbrenner (5), in dem aus der Brennstoffzelle (4) ausgestoßene ungenutzte Teile des reformierten Gases und der Luft verbrennen;
ein Verbrennungsabgasweg (10), den ein in dem Verbrenner (5) erzeugtes Verbrennungsabgas durchströmt;
einen in dem Verbrennungsabgasweg (10) angeordneten Reiniger (6), der einen Verbrennungskatalysator zur Befreiung des Verbrennungsabgases von giftigen Substanzen einschließt;
einen Heizer (11), der den Verbrennungskatalysator erwärmt;
einen Zünder (9) zur Durchführung einer Operation der Zündung des Verbrenners (5); und
eine Steuerung (20),
**dadurch gekennzeichnet, dass**
bei einer Inbetriebnahme, in dem Fall, dass eine anormale Unterbrechung festgestellt wurde, bei der ein Spülvorgang des Brennstoffzellensystems mit Hochtemperaturbetrieb unmöglich ist, die Steuerung (20) konfiguriert wird, um zunächst den Heizer (11) so zu steuern, dass der Heizer (11) den Verbrennungskatalysator auf eine vorgegebene Temperatur erwärmt und anschließend die Luftzufuhrvorrichtung (7) so zu steuern, dass die Luftzufuhrvorrichtung (7) das Brennstoffzellensystem mit Hochtemperaturbetrieb mittels der Zufuhr von Luft zu dem Reformer (3) spült,
wobei bei einer Inbetriebnahme, in dem Fall, dass keine anormale Unterbrechung festgestellt wurde, bei der ein Spülvorgang des Brennstoffzellensystems mit Hochtemperaturbetrieb unmöglich ist, die Steuerung (20) konfiguriert wird, um den Zünder (9) so zu steuern, dass der Zünder (9) die Operation des Zündens des Verbrenners (5) mittels der Zufuhr des Ausgangsmaterials zu dem Reformer (3) durchführt, ohne dass der Verbrennungskatalysator durch den Heizer (11) erwärmt wird.

2. Brennstoffzellensystem mit Hochtemperaturbetrieb nach Anspruch1, wobei, nachdem das Brennstoffzellensystem mit Hochtemperaturbetrieb mittels der Zufuhr der Luft zu dem Reformer (3) gespült worden ist, die Steuerung (20) konfiguriert wird, um den Zünder (9) so zu steuern, dass der Zünder (9) die Operation der Zündung des Verbrenners (5) mittels der Zufuhr des Ausgangsmaterials zu dem Reformer (3) durchführt.

3. Verfahren zum Betreiben eines Brennstoffzellensystem mit Hochtemperaturbetrieb, das während des Betriebs die nachstehenden Schritte umfasst:
Bildung eines reformierten Gases aus einem Ausgangsmaterial und Luft in einem Reformer (3);
Erzeugen von Elektrizität mit dem reformierten Gas und Luft in einer Brennstoffzelle (4);
Verbrennen, in einem Verbrenner (5), ungenutzter Teile des reformierten Gases und der Luft, die aus der Brennstoffzelle (4) ausgestoßen werden; und
Befreien des Verbrennungsabgases von toxischen Substanzen mittels eines Verbrennungskatalysators einer Reinigungsvorrichtung (6), die in einem Verbrennungsabgasweg (10) angeordnet ist, durch den das in dem Verbrenner (5) erzeugte Verbrennungsabgas strömt,
**dadurch gekennzeichnet, dass**
bei einer Inbetriebnahme, in dem Fall, dass eine anormale Unterbrechung festgestellt wird, bei der ein Spülvorgang des unmöglich ist, der Verbrennungskatalysator mittels des Heizers (11) zuerst auf eine vorgegebene Temperatur erwärmt wird und anschließend das Brennstoffzellensystem mit Hochtemperaturbetrieb mittels der Luft gespült wird, die dem Reformer (3) zugeführt wird,
wobei bei einer Inbetriebnahme, in dem Fall, dass keine anormale Unterbrechung festgestellt wird, bei der ein Spülvorgang des unmöglich ist, eine Operation des Zündens des Verbrenners (5) mittels des Ausgangsmaterials, das dem Reformer (3) zugeführt wird, durchführt wird, ohne dass der Verbrennungskatalysator von dem Heizer (11) erwärmt wird.

4. Verfahren nach Anspruch 3, wobei, nachdem das Brennstoffzellensystem mit Hochtemperaturbetrieb mittels der Luft, die dem Reformer (3) zugeführt wird, gespült worden ist, eine Operation der Zündung des Verbrenners (5) mittels des Ausgangsmaterials, das dem Reformer (3) zugeführt wird, durchführt wird.

## Revendications

1. Système à pile combustible fonctionnant à haute température comprenant:
un reformeur (3) qui produit un gaz reformé à partir d'air et d'une matière première; un fournisseur d'air (7) qui fournit l'air au reformeur (3);
une pile à combustible (4) générant de l'électricité avec le gaz reformé provenant du reformeur (3) et de l'air;
une chambre de combustion (5) dans laquelle brûlent des parties non utilisées du gaz reformé et de l'air évacué de la pile à combustible (4);
un trajet de gaz d'échappement de combustion (10) à travers lequel passe un gaz d'échappement de combustion généré dans la chambre de combustion (5);
un dépurateur (6), prévu dans le trajet de gaz d'échappement de combustion (10), qui comprend un catalyseur de combustion pour libérer le gaz d'échappement de combustion de substances toxiques;
un radiateur (11) qui chauffe le catalyseur de combustion;
un allumeur (9) pour effectuer une opération d'allumage de la chambre de combustion (5); et
un contrôleur (20),
**caractérisé en ce que**
au démarrage, dans le cas où il a détecté un arrêt anormal dans lequel une opération de purge du système de pile à combustible fonctionnant à haute température est impossible, le dispositif de commande (20) est configuré pour commander d'abord le chauffage (11) afin que le chauffage (11) chauffe le catalyseur de combustion à une température prédéterminée puis commande le fournisseur d'air (7) de sorte que le fournisseur d'air (7) purge le système de pile à combustible fonctionnant à haute température en fournissant de l'air au reformeur (3),
dans lequel, au démarrage, dans le cas où aucun arrêt anormal n'a été détecté dans lequel une opération de purge du système de pile à combustible à haute température est impossible, le dispositif de commande (20) est configuré pour commander l'allumeur (9), sans catalyseur de combustion étant chauffé par le radiateur (11), de sorte que l'allumeur (9) exécute l'opération d'allumage de la chambre de combustion (5) en fournissant la matière première au reformeur (3).

2. Système de pile à combustible fonctionnant à haute température selon la revendication 1, dans lequel, une fois que le système de pile à combustible fonctionnant à haute température a été purgé en fournissant de l'air au reformeur (3), le contrôleur (20) est configuré pour contrôler l'allumeur (9) de sorte que l'allumeur (9) effectue l'allumage de la chambre de combustion (5) en fournissant la matière première au réformateur (3).

3. Procédé pour faire fonctionner un système de pile à combustible fonctionnant à haute température, comprenant les étapes suivantes, pendant l'exploitation:
former un gaz reformé à partir d'une matière première et de l'air dans un reformeur (3); générer de l'électricité avec le gaz reformé et l'air dans une pile à combustible (4);
brûler dans une chambre de combustion (5), des parties non utilisées du gaz reformé et de l'air évacué à partir de la pile à combustible (4); et
avec un catalyseur de combustion d'un dépurateur (6) prévu dans un trajet de gaz d'échappement de combustion (10) à travers lequel passe un gaz d'échappement de combustion généré dans la chambre de combustion (5), pour ainsi libérer les gaz de combustion des substances toxiques,
**caractérisé en ce que**
au démarrage au cas où un arrêt anormal dans lequel une opération de purge est impossible est détecté, le catalyseur de combustion est chauffé à une température prédéterminée par le radiateur (11), puis le système de pile à combustible fonctionnant à haute température est purgé par l'air fourni au reformeur (3),
lors du démarrage au cas où un arrêt anormal dans lequel une opération de purge est impossible n'est pas détecté, une opération d'allumage de la chambre de combustion (5) est effectuée par la matière première fournie au reformeur (3), sans que le catalyseur de combustion ne soit chauffé par le radiateur (11).

4. Procédé selon la revendication 3, dans lequel, une fois que la pile à combustible fonctionnant à haute température système a été purgée par l'air fourni au reformeur (3), une opération d'allumage de la chambre de combustion (5) consiste à injecter de la matière première au réformateur (3).
